# EUROPÄISCHE PATENTSCHRIFT

(11) **EP 0 946 382 B1**
(45) Veröffentlichungstag und Bekanntmachung des Hinweises auf die Patenterteilung: **30.06.2004**
(21) Anmeldenummer: 98961000.1
(22) Anmeldetag: 09.10.1998
(51) Int. Cl.: B60S 1/40, B60S 1/34

(54) **WISCHANLAGE, INSBESONDERE FÜR SCHEIBEN VON KRAFTFAHRZEUGEN**
WIPER SYSTEM, ESPECIALLY FOR WINDOWS IN MOTOR VEHICLES
SYSTEME D'ESSUIE-GLACE, NOTAMMENT POUR VEHICULE AUTOMOBILE

(30) Priorität: 30.10.1997 DE 19747797
(43) Veröffentlichungstag der Anmeldung: 06.10.1999
(73) Patentinhaber: ROBERT BOSCH GMBH, 70442 Stuttgart (DE)
(72) Erfinder: METZ, Ulrich, D-77880 Sasbach Obersasbach (DE)
(86) Internationale Anmeldenummer: PCT/DE1998/002989
(87) Internationale Veröffentlichungsnummer: WO 1999/022972

(56) Entgegenhaltungen:
- EP-A- 0 379 348
- EP-A- 0 436 510
- DE-A- 3 530 956
- FR-A- 1 171 426
- FR-A- 2 517 609

## Beschreibung

Die Erfindung betrifft eine Wischanlage, insbesondere für Scheiben von Kraftfahrzeugen, mit den im Oberbegriff des Anspruchs 1 genannten Merkmalen.

### Stand der Technik

Wischanlagen der gattungsgemäßen Art sind bekannt. Diese umfassen einen auf einer karosseriefesten Wischerwelle angeordneten Wischerarm, der ein Wischerblatt trägt. Durch alternierende Drehbewegungen der Wischerwelle ist der Wischerarm in eine Schwenkbewegung versetzbar, wodurch das am Wischerarm befestigte Wischerblatt dieser Schwenkbewegung folgt und in bekannter Weise die Scheibe eines Kraftfahrzeuges wischt. Um mittels der Anordnung auch gekrümmte Scheiben, beispielsweise Windschutzscheiben von Kraftfahrzeugen, wischen zu können, ist es bekannt, den Wischerarm an seinem einen Ende mit dem Wischerblatt, insbesondere mit einem den Wischerblatt haltenden Bügel, über ein erstes Gelenk zu verbinden und das andere Ende des Wischerarmes mit einem auf der Wischerwelle drehfest angeordneten Befestigungsarm über ein zweites Gelenk zu verbinden. Die Drehachsen der Gelenke sind hierbei parallel zueinander und senkrecht zu einer Wischblattebene angeordnet.

Eine ähnliche Wischanlage geht aus der FR-A-2 517 609 hervor. Bei dieser bekannten Wischanlage ist der Wischerarm und das daran befestigte Wischblatt geneigt angeordnet, um eine Erhöhung des Anpressdrucks des Wischblatts auf der Windschutzscheibe zu erreichen. Bei einer in der EP-A-0 379 348 beschriebenen Wischvorrichtung ist ein geneigt angeordnetes Verbindungsgelenk zwischen Wischblatt und einem Wischerarm vorgesehen, was ebenfalls zur Erhöhung eines Anpressdrucks des Wischblatts auf der Windschutzscheibe führen soll.

Eine Wischanlage der gattungsgemäßen Art ist beispielsweise aus der FR-A-1 171 426 bekannt.

### Vorteile der Erfindung

Die erfindungsgemäße Wischeranlage mit den im Anspruch 1 genannten Merkmalen bietet den Vorteil, daß eine Vergrößerung des Wischfeldes möglich ist. Dadurch, daß eine Drehachse des ersten Gelenkes unter einem von 90° abweichenden Winkel zu einer Wischblattebene angeordnet ist und eine Drehachse des zweiten Gelenkes unter einem Winkel zur Drehachse des ersten Gelenkes angeordnet ist, ist in einfacher Weise möglich, eine Wischblattsteuerung zu erreichen, bei der die Schwenkbewegung des Wischerarms in eine Relativbewegung des Wischerblattes umsetzbar ist, die zu einer Vergrößerung des Wischfeldes bei gleichbleibendem Schwenkbereich führt. Diese Lösung zeichnet sich durch einen besonders einfachen und kompakten Aufbau aus, der gegenüber bekannten Wischanlagen keine zusätzlichen Bauelemente benötigt.

Vorteilhafte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine Draufsicht auf einen Wischerarm in einer Ruheposition;
- Figur 2: eine perspektivische Ansicht des Wischerarmes in der in Figur 1 gezeigten Stellung;
- Figur 3: eine Draufsicht auf den Wischerarm in einer Umkehrlage und
- Figur 4: eine perspektivische Ansicht des Wischerarmes in der Umkehrlage.

### Beschreibung des Ausführungsbeispiels

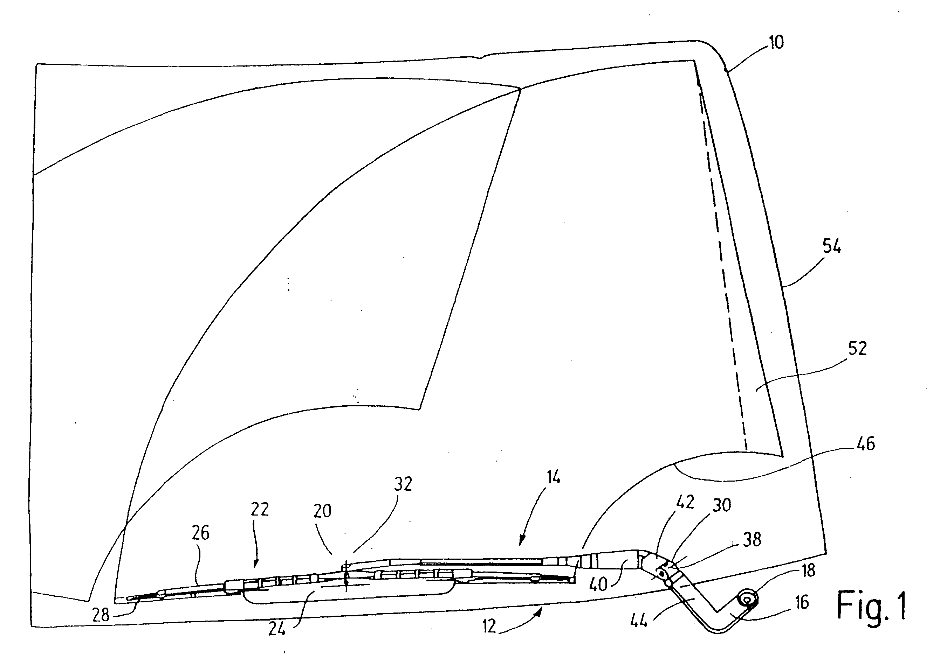

In Figur 1 ist eine schematische Draufsicht auf eine Windschutzscheibe 10 eines Kraftfahrzeuges gezeigt. Der Windschutzscheibe ist eine Wischanlage 12 zugeordnet, die nur teilweise dargestellt ist. Die Wischeranlage 12 umfaßt wenigstens einen Wischerarm 14, der an einer nicht dargestellten Wischerwelle verschwenkbar angelenkt ist. Hierzu besitzt der Wischerarm 14 ein Befestigungsarm 16, der über eine Lagerstelle 18 drehfest auf der Wischerwelle angeordnet ist. Der Wischerarm 14 ist über ein erstes Gelenk 20 mit einem Wischerblatt 22 verbunden. Das Wischerblatt 22 besteht im wesentlichen aus einem Grundteil 24, in dem ein Bügel 26 angeordnet ist, der ein Wischergummi 28 trägt. Der Wischergummi 28 steht mit der Oberfläche der zu wischenden Windschutzscheibe 10 in Berührungskontakt.

An seinem anderen Ende ist der Wischerarm 14 mit einem zweiten Gelenk 30 mit dem Befestigungsarm 16 verbunden.

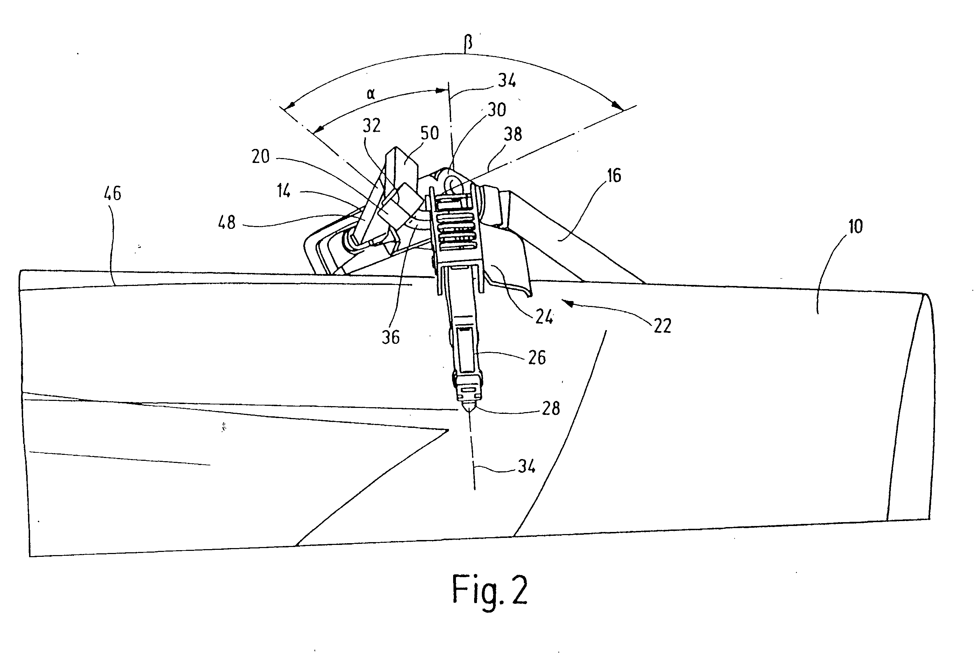

Eine Drehachse 32 des ersten Gelenkes 20 verläuft hierbei unter einem Winkel α zu einer Wischblattebene 34. Diese Ausgestaltung des Gelenkes 20 wird insbesondere in Figur 2 deutlich, die den Wischerarm 14 in einer perspektivischen Ansicht in Richtung der Wischblattebene 34 zeigt. Im übrigen sind gleiche Teile wie in Figur 1 mit gleichen Bezugszeichen versehen und nicht nochmals erläutert.

Anhand der perspektivischen Ansicht in Figur 2 wird eine Krümmung der Windschutzscheibe 10, die hier praktisch quer zu einer Fahrtrichtung des Kraftfahrzeuges und quer zu einer Fahrzeughochachse dargestellt ist, erkennbar. Anhand dieser perspektivischen Ansicht wird deutlich, daß die Drehachse 32 des Gelenkes 20 unter dem Winkel α zur Wischblattebene 34 verläuft. Der Winkel α beträgt beispielsweise 45°. Zur Ausbildung dieser winklig verlaufenden Drehachse 32 besitzt das Gelenk 20 ein Koppelteil 36, das in etwa senkrecht zur Wischblattebene 34 am Wischerblatt 22 befestigt ist und unter dem Winkel α in das Gelenk 20 übergeht.

Bei dem Ausführungsbeispiel wird von geraden Wischblättern 22 ausgegangen. Die Erfindung läßt sich auch auf gebogene Wischblätter übertragen. Hier weicht der Winkel α zwischen der Drehachse 32 und einer Wischblattfläche von 90° ab, da für gebogene Wischblätter keine Wischblattebene definiert werden kann.

Ferner wird anhand der Perspektivansicht in Figur 2 deutlich, daß eine Drehachse 38 des Gelenkes 30 unter einem Winkel β zur Drehachse 32 verläuft. Hierbei ist die Drehachse 38 sowohl - in ein gedachtes kartesisches Koordinatensystem projiziert - in x- und y-Richtung zur Drehachse 32 geneigt. Dies wird einerseits durch eine Abwinklung 40 des Wischerarmes 14 und andererseits durch eine verdrehte Anordnung zwischen einem dem Gelenk 30 zugeordneten Abschnitt 42 des Wischerarmes 14 und einem dem Gelenk 30 zugeordneten Abschnitt 44 des Befestigungsarmes 16 erreicht.

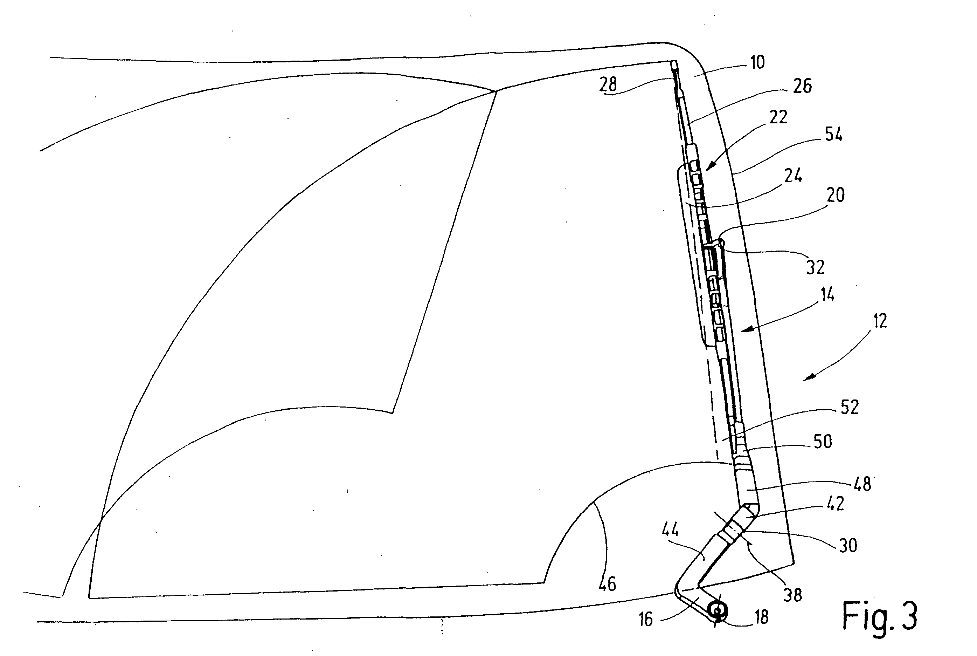

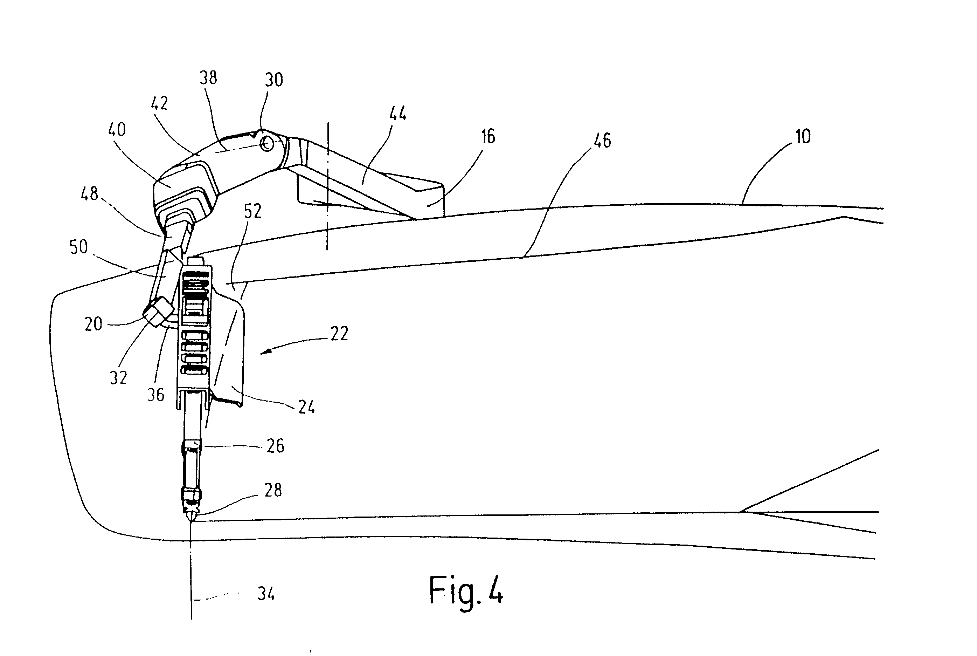

Durch die Ausbildung des Wischerarmes 14 wird folgende, anhand der Figuren 3 und 4 verdeutlichte Funktion erreicht. In Figur 3 ist eine Draufsicht auf den Wischerarm 14 in seiner Umkehrlage und in Figur 4 eine perspektivische Ansicht des Wischerarmes in der Umkehrlage, in Richtung der Wischblattebene 34 betrachtet, gezeigt.

Der Wischerarm 14 wird über die nicht dargestellte Wischerwelle in eine Schwenkbewegung über die Windschutzscheibe 10 gedrängt. Hierbei überstreicht der Wischergummi 28 ein Wischfeld 46. Durch eine Drehbewegung der Wischerwelle wird der auf der Wischerwelle drehfest angeordnete Befestigungsarm 16 entsprechend mitgenommen. Durch den gekrümmten Verlauf der Windschutzscheibe 10 erfährt der Wischerarm 14 eine Hubbewegung um die Drehachse 38 des Gelenkes 30. Durch die unter dem Winkel β angeordnete Drehachse 38 wird die Hubbewegung durch eine Rotation des Wischerarmes 14 um seine Längsachse 46 überlagert. Infolge dieser Überlagerung verdrehen zwei beweglich zueinander angeordnete Abschnitte 48 und 50 zueinander, so daß die Drehbewegung des Abschnittes 50 auf das Gelenk 20 übertragen wird. Hierdurch kommt es zu einer relativen Drehbewegung zwischen dem Abschnitt 48 des Wischerarmes 14 und dem Wischerblatt 22. Dies wiederum bewirkt, daß die Schwenkbewegung des Wischerarmes 14 durch eine zusätzliche Schwenkbewegung des Wischerblattes 22 auf der Windschutzscheibe 10 überlagert wird. Im Ergebnis dieser Überlagerung kommt es zu einer hier mit 52 bezeichneten Wischfeldvergrößerung gegenüber der, gestrichelt dargestellten, Wischfeldbegrenzung bei bekannten Wischeranlagen.

Es wird deutlich, daß insbesondere bei vorgegebener Position der Wischerwelle zu einem Rand 54 der Windschutzscheibe 10 durch Austausch der Wischerarme 14 eine Wischfeldvergrößerung 52 erzielbar ist.

## Patentansprüche

1. Wischanlage, insbesondere für Scheiben von Kraftfahrzeugen, mit einem über eine Wischerwelle schwenkbar antreibbaren Wischerarm, wobei der Wischerarm ein mit der Scheibe in Kontakt stehendes Wischerblatt trägt, und das Wischerblatt mit dem Wischerarm über eine erstes Gelenk miteinander verbunden ist, und der Wischerarm mit einer drehfest auf der Wischerwelle angeordneten Befestigungsarm über ein zweites Gelenk verbunden ist, **dadurch gekennzeichnet, daß** eine Drehachse (32) des ersten Gelenkes (20) unter einem von 90° abweichenden Winkel (α) zu einer Wischblattebene (34) angeordnet ist, und eine Drehachse (38) des zweiten Gelenkes (30) unter einem Winkel (β) zur Drehachse (32) angeordnet ist.

2. Wischanlage nach Anspruch 1, **dadurch gekennzeichnet, daß** das Gelenk (20) von einem Koppelteil (36) gebildet ist, an dem das Wischerblatt (22) angelenkt ist, und das zur Ausbildung des Winkels (α) eine Krümmung aufweist.

3. Wischanlage nach einem der vorhergehenden Ansprüche, **dadurch gekennzeichnet, daß** der Winkel (α) 45° beträgt.

4. Wischanlage nach einem der vorhergehenden Ansprüche, **dadurch gekennzeichnet, daß** ein Richtungsvektor des Verlaufes der Drehachse (32) von der Windschutzscheibe (10) wegweist.

5. Wischanlage nach einem der vorhergehenden Ansprüche, **dadurch gekennzeichnet, daß** der Wischerarm (14) zwischen den Gelenken (20, 30) zwei zueinander verdrehbare Abschnitte (48, 50) aufweist.

6. Wischanlage nach einem der vorhergehenden Ansprüche, **dadurch gekennzeichnet, daß** ein Richtungsvektor des Verlaufes der Drehachse (38) zur Drehachse (32) sowohl -in ein kartesisches Koordinatensystem projeziert- in x- und y-Richtung geneigt ist.

7. Wischanlage nach einem der vorhergehenden Ansprüche, **dadurch gekennzeichnet, daß** der Winkel (α) zwischen der Drehachse (32) und einer Wischblattfläche von 90° abweicht.

## Claims

1. Wiper system, in particular for windows of motor vehicles, having a wiper arm which can be driven in a pivotable manner via a wiper shaft, the wiper arm carrying a wiper blade which is in contact with the window, and the wiper blade being connected to the wiper arm via a first joint, and the wiper arm being connected to a fastening arm, which is arranged in a rotationally fixed manner on the wiper shaft, via a second joint, **characterized in that** an axis of rotation (32) of the first joint (20) is arranged at an angle (α) differing from 90° with respect to a wiper-blade plane (34), and an axis of rotation (38) of the second joint (30) is arranged at an angle (β) with respect to the axis of rotation (32).

2. Wiper system according to Claim 1, **characterized in that** the joint (20) is formed by a coupling part (36) to which the wiper blade (22) is coupled, and which is curved in order to form the angle (α).

3. Wiper system according to one of the preceding claims, **characterized in that** the angle (α) is 45°.

4. Wiper system according to one of the preceding claims, **characterized in that** a directional vector of the profile of the axis of rotation (32) points away from the windscreen (10).

5. Wiper system according to one of the preceding claims, **characterized in that** the wiper arm (14) has, between the joints (20, 30), two sections (48, 50) which can be rotated with respect to each other.

6. Wiper system according to one of the preceding claims, **characterized in that** a directional vector of the profile of the axis of rotation (38) is inclined with respect to the axis of rotation (32) both in the x- and y-direction - when projected into a Cartesian system of coordinates.

7. Wiper system according to one of the preceding claims, **characterized in that** the angle (α) between the axis of rotation (32) and a wiper-blade surface differs from 90°.

## Revendications

1. Installation d'essuie-glace notamment pour les vitres de véhicules automobiles comportant un bras d'essuie-glace entraîné en basculement par un arbre d'essuie-glace, le bras portant un balai d'essuie-glace en contact avec la vitre et relié au bras par l'intermédiaire d'une première articulation, le bras d'essuie-glace étant relié par une seconde articulation au bras de fixation solidaire en rotation de l'axe d'essuie-glace,
**caractérisée en ce qu'**
un axe de rotation (32) de la première articulation (20) fait un angle (α) différent de 90° par rapport au plan (34) du balai d'essuie-glace et l'axe de rotation (38) de la seconde articulation (30) fait un angle (β) par rapport à l'axe de rotation (32).

2. Installation d'essuie-glace selon la revendication 1,
**caractérisée en ce que**
l'articulation (20) est formée par une pièce de couplage (36) à laquelle est articulé le bras d'essuie-glace (22) et qui comporte une courbure pour réaliser l'angle (α).

3. Installation d'essuie-glace selon l'une quelconque des revendications précédentes,
**caractérisée en ce que**
l'angle (α) est égal à 45°.

4. Installation d'essuie-glace selon l'une quelconque des revendications précédentes,
**caractérisée par**
un vecteur directionnel du tracé de l'axe de rotation (32) s'écarte du pare-brise (10).

5. Installation d'essuie-glace selon l'une quelconque des revendications précédentes,
**caractérisée en ce que**
le bras d'essuie-glace (14) comporte deux segments (48, 50) susceptibles de tourner l'un par rapport à l'autre entre les articulations (20, 30).

6. Installation d'essuie-glace selon l'une quelconque des revendications précédentes,
**caractérisée en ce qu'**
un vecteur directionnel du tracé de l'axe de rotation (38) est incliné par rapport à l'axe de rotation (32) dans la direction x et dans la direction y en projections dans un système de coordonnées cartésiennes.

7. Installation d'essuie-glace selon l'une quelconque des revendications précédentes,
**caractérisée en ce que**
l'angle (α) entre l'axe de rotation (32) et la surface du balai d'essuie-glace est différent de 90°.
